# FASCICULE DE BREVET EUROPEEN

(11) **EP 3 143 747 B1**
(45) Date de publication et mention de la délivrance du brevet: **04.07.2018**
(21) Numéro de dépôt: 15727701.3
(22) Date de dépôt: 13.05.2015
(51) Int. Cl.: H04L 29/06, G06F 21/41

(54) **PROCÉDÉ DE GESTION DE COMPTES UTILISATEURS DANS UNE APPLICATION HÉBERGÉE**
VERFAHREN ZUR VERWALTUNG VON BENUTZERKONTEN IN EINER HOST-ANWENDUNG
METHOD FOR MANAGING USER ACCOUNTS IN A HOSTED APPLICATION

(30) Priorité: 14.05.2014 FR 1454303
(43) Date de publication de la demande: 22.03.2017
(73) Titulaire: Evidian, 78340 Les Clayes Sous Bois (FR)
(72) Inventeur: GUIONNEAU, Christophe, 38000 Grenoble (FR)
(74) Mandataire: Cabinet Camus Lebkiri
(86) Numéro de dépôt international: PCT/FR2015/051265
(87) Numéro de publication internationale: WO 2015/173517

(56) Documents cités:
- G. Saralaya ET AL: "Design and implement just-in-time provisioning with SAML", , 14 août 2012 (2012-08-14), XP055160627, Extrait de l'Internet: URL:http://www.ibm.com/developerworks/libr ary/se-jitp/se-jitp-pdf.pdf [extrait le 2015-01-08]
- WAHL MICROSOFT M: "SCIM Profile For Enhancing Just-In-Time Provisioning; draft-wahl-scim-jit-profile-02.txt", SCIM PROFILE FOR ENHANCING JUST-IN-TIME PROVISIONING; DRAFT-WAHL-SCIM-JIT-PROFILE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 7 mai 2014 (2014-05-07), pages 1-16, XP015099038,
- D. Carru: "JIT User Provisioning in OIF / SP", , 28 avril 2014 (2014-04-28), XP002734297, Extrait de l'Internet: URL:https://blogs.oracle.com/dcarru/entry/ jit_user_provisioning_in_oif [extrait le 2015-01-09]
- OASIS: "Security Assertion Markup Language(SAML) V2.0 Technical Overview", INTERNET CITATION, 25 mars 2008 (2008-03-25), pages 1-51, XP002578461, Extrait de l'Internet: URL:http://docs.oasis-open.org/security/sa ml/Post2.0/sstc-saml-tech-overview.2.0-cd- 02.pdf [extrait le 2010-04-14]

## Description

### DOMAINE TECHNIQUE DE L'INVENTION

La présente invention se rapporte au domaine des fournisseurs d'applications (« Application Service Provider » en anglais) telles des applications « Cloud » ou des logiciels en tant que service (SaaS, « Software as a Service »), c'est-à-dire des applications hébergées.

### ARRIERE PLAN TECHNOLOGIQUE DE L'INVENTION

On appelle fournisseur d'application un prestataire capable de fournir à des utilisateurs une application hébergée utilisable à travers un réseau. Ces applications hébergées étant souvent facturées à l'usage et/ou disponibles pour une durée limitée, les fournisseurs d'applications requièrent l'authentification des utilisateurs tentant d'accéder à l'application.

Par ailleurs, les fournisseurs d'applications permettent généralement de déléguer l'authentification à des entités nommées fournisseurs d'identités auprès desquelles les utilisateurs sont inscrits aux travers de mécanismes de délégation d'authentification et de fédération d'identité. Cette délégation requiert un lien de confiance préalablement établi entre le fournisseur d'application et le fournisseur d'identité.

Des groupements d'utilisateurs, par exemple des entreprises, ont donc la possibilité d'installer un fournisseur d'identité pour réaliser l'authentification des utilisateurs. Il est alors du ressort du fournisseur d'identité d'optimiser la création (appelée provisionnement par la suite) et la destruction (appelée déprovisionnement par la suite) des comptes utilisateurs en fonction de l'utilisation réelle, notamment pour réduire le nombre de licences à acheter auprès du fournisseur d'application.

La plupart des solutions connues consistent en l'utilisation d'un gestionnaire des droits et rôles des utilisateurs pour effectuer le provisionnement ou le déprovisionnement d'un compte utilisateur au moment où un utilisateur acquiert ou perd les droits permettant l'accès à l'application. Si cette solution permet effectivement de réaliser le déprovisionnement au moment où l'information de perte de droit est connue, elle ne permet pas d'optimiser le provisionnement au plus juste de l'usage réel : en effet, l'utilisateur peut acquérir le droit longtemps avant son usage, voire ne jamais utiliser son droit d'accès à l'application. A un instant donné, il y a donc toujours plus d'utilisateurs provisionnés (c'est-à-dire d'utilisateurs associés à un compte utilisateur) que d'utilisateurs qui utilisent réellement l'application.

Des solutions de provisionnement à la volée existent, mais elles doivent être installées du côté du fournisseur d'application. Ces solutions reposent sur des attributs utilisateurs véhiculés par des protocoles permettant de communiquer des preuves d'authentification entre le fournisseur d'identité et le fournisseur d'application. Les protocoles les plus utilisés sont les protocoles SAML (« Security assertion markup language »), OAuth ou encore OpenID. Ces solutions dépendent donc du bon vouloir des fournisseurs d'applications à les mettre en oeuvre. De plus, elles sont limitées au provisionnement et ne prennent pas en compte le déprovisionnement.

Les documents "Design and implement just-in-time provisioning with SAML" G. Saralaya ET AL, "SCIM Profile For Enhancing Just-In-Time Provisioning; draft-wahl-scim-jit-profile-02.txt" WAHL MICROSOFT M, et "JIT User Provisioning in OIF / SP" D. Carru, divulguent des solutions à la volée.

### DESCRIPTION GENERALE DE L'INVENTION

L'objet de l'invention offre une solution au problème évoqué précédemment, en proposant un procédé de gestion des comptes utilisateurs dans une application hébergée, permettant une optimisation du provisionnement des comptes utilisateurs.

Selon un premier aspect, l'invention concerne donc un procédé de gestion des comptes utilisateurs dans une application d'un fournisseur d'application, comprenant les étapes suivantes, réalisées par un fournisseur d'identité partageant une relation de confiance avec le fournisseur d'application :
- recevoir une requête de preuve d'authentification pour authentifier un utilisateur tentant d'accéder à l'application, ledit utilisateur étant inscrit auprès du fournisseur d'identité
- obtenir d'une base de données locale des données sur l'utilisateur, lesdites données comprenant : des données d'authentification et des données de droit d'accès
- authentifier l'utilisateur au moyen des données d'authentification
- déterminer le droit d'accéder à l'application par l'utilisateur, au moyen des données de droit d'accès
- déterminer l'existence ou l'absence d'un compte utilisateur associé à l'utilisateur, par interrogation d'une base de données externe gérée par le fournisseur d'application
- si l'utilisateur dispose du droit d'accéder à l'application et qu'il n'existe pas de compte utilisateur associé à l'utilisateur :
   ▪ déclencher le provisionnement du compte utilisateur auprès d'une entité
   ▪ générer une preuve d'authentification associée à l'utilisateur
   ▪ envoyer ladite preuve d'authentification au fournisseur d'application.

Grâce au procédé selon l'invention, les comptes utilisateurs sont provisionnés au moment où les utilisateurs qui disposent du droit d'accéder à l'application désirent effectivement accéder à l'application. Les comptes utilisateurs ne sont donc pas créés systématiquement dès qu'un utilisateur obtient un droit d'accéder à l'application. De plus, ce procédé est mis en oeuvre par le fournisseur d'identité, il n'y a donc pas besoin d'intervention du côté du fournisseur d'application.

Le procédé selon l'invention peut présenter une ou plusieurs caractéristiques complémentaires parmi les suivantes, considérées individuellement ou selon toutes les combinaisons techniquement possibles.

Dans un mode de réalisation, le procédé comporte l'étape suivante : si l'utilisateur ne dispose pas du droit d'accéder à l'application et qu'il existe un compte utilisateur associé à l'utilisateur, déclencher le déprovisionnement du compte utilisateur auprès de l'entité. Ainsi, si l'utilisateur a perdu son droit d'accès à l'application, son compte est supprimé lorsqu'il souhaite y accéder.

Dans un mode de réalisation, l'entité est le fournisseur d'application, le fournisseur d'identité fournissant des instructions de provisionnement ou de déprovisionnement de compte à la base de données externe. Dans ce mode de réalisation, le fournisseur d'identité réalise lui-même le provisionnement ou le déprovisionnement en utilisant des interfaces et protocoles mis à disposition par le fournisseur d'application et en fournissant toutes les informations nécessaires à la création du compte. On note que les actions nécessaires, les protocoles et formats à mettre en oeuvre dépendent de chaque fournisseur d'application. Les fournisseurs d'applications hébergées fournissent un ensemble d'interfaces et des guides pour réaliser ces actions, utilisent des protocoles normalisés ou propriétaire, et certains fournissent des commandes en ligne ou des exécutables pour réaliser ces actions.

Dans un mode de réalisation, l'entité est un composant externe de gestion, le composant externe de gestion fournissant des instructions de provisionnement ou de déprovisionnement de compte à la base de données externe. Dans ce mode de réalisation, le fournisseur d'identité ne réalise pas lui-même le provisionnement ou le déprovisionnement, mais le délègue au composant externe, par exemple un composant des identités et des accès, qui déclenche des flux de travail (« workflow » en anglais) de provisionnement ou de déprovisionnement. Le composant externe utilise les interfaces et protocoles mis à disposition par le fournisseur d'application et fournit toutes les informations nécessaires à la création du compte.

Dans un mode de réalisation, après un déclenchement de provisionnement ou de déprovisionnement d'un compte utilisateur, le fournisseur d'identité met à jour des informations de comptes utilisateurs, indiquant les comptes associés au fournisseur d'applications et les comptes associés à l'utilisateur.

Dans un mode de réalisation, le fournisseur d'identité réalise une étape de vérification globale, comprenant :
- pour chaque utilisateur inscrit auprès du fournisseur d'identité, obtenir de la base de données locale des données de droit d'accès relatives à l'utilisateur,
- déterminer une liste de comptes à déprovisionner, en fonction des droits d'accès et des informations de comptes utilisateurs
- déclencher le déprovisionnement des comptes de la liste de comptes à déprovisionner.

La vérification globale permet de s'assurer que les comptes provisionnés sont bien associés à des utilisateurs qui disposent toujours des droits ou rôles nécessaires à la possession d'un compte, et le cas échéant les comptes qui ne respectent pas cette condition sont déprovisionnés. Le déprovisionnement est alors réalisé soit directement par le fournisseur d'identité, soit par le composant externe de gestion.

Dans un mode de réalisation, le fournisseur d'identité réalise une étape de réconciliation, comprenant :
- obtenir de la base de données externe une liste de comptes provisionnés
- comparer les informations de comptes utilisateurs avec la liste de comptes à provisionner
- mettre à jour les informations de comptes utilisateurs en fonction du résultat de la comparaison.
La réconciliation permet de détecter des désynchronisations et de générer des alertes ou de corriger des incohérences.

Dans un mode de réalisation, le fournisseur d'identité réalise une étape de suppression de compte, comprenant :
- obtenir une information de modification de données de droit d'accès d'un utilisateur
- déterminer une liste de comptes à déprovisionner, en fonction des données de droits d'accès modifiées et des informations de comptes utilisateurs
- déclencher le déprovisionnement des comptes de la liste de comptes à déprovisionner.
Ainsi, lorsque le fournisseur d'identité est mis au courant qu'un utilisateur perd ses droits ou rôles nécessaires à la possession d'un compte, un déprovisionnement est déclenché. Le déprovisionnement est alors réalisé soit directement par le fournisseur d'identité, soit par le composant externe de gestion.

Selon un deuxième aspect, l'invention concerne un fournisseur d'identité partageant une relation de confiance avec un fournisseur d'application, adapté pour mettre en oeuvre un procédé selon le premier aspect de l'invention.

Selon un troisième aspect, l'invention concerne un programme d'ordinateur, comprenant un ensemble d'instructions, qui lorsqu'elles sont exécutées par un ordinateur, provoque la mise en oeuvre d'un procédé selon le premier aspect de l'invention.

L'invention et ses différentes applications seront mieux comprises à la lecture de la description qui suit et à l'examen des figures qui l'accompagnent.

### BREVE DESCRIPTION DES FIGURES

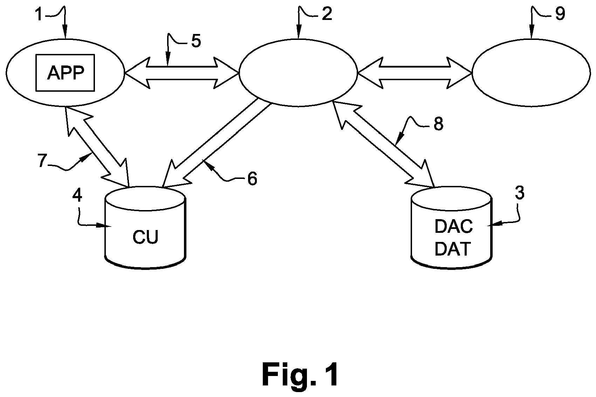

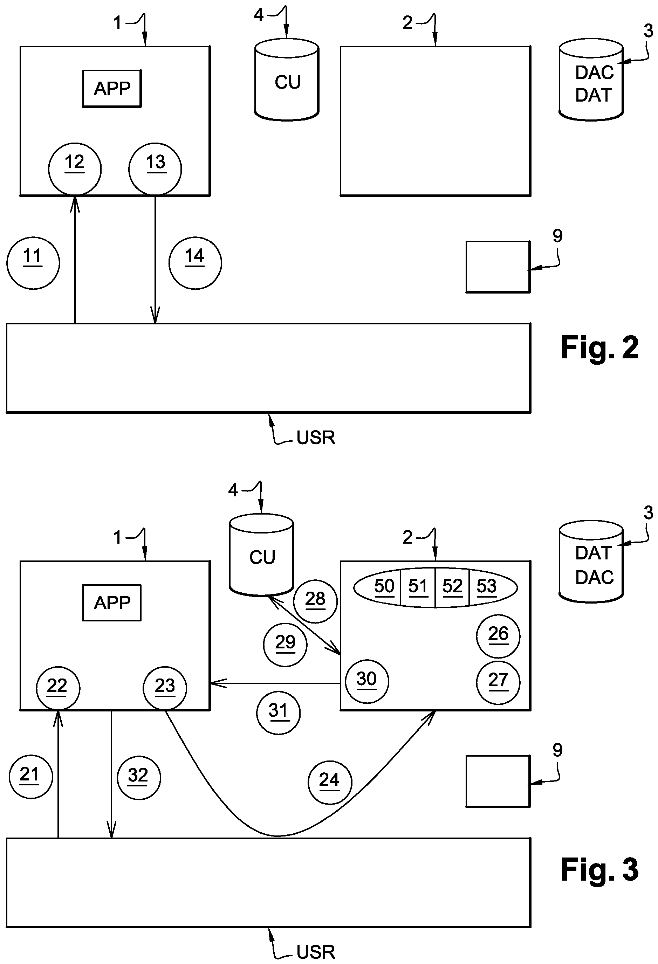

Les figures ne sont présentées qu'à titre indicatif et nullement limitatif de l'invention. Les figures montrent :
- A la figure 1, une représentation schématique d'un réseau comprenant un fournisseur d'application et un fournisseur d'identité selon un mode de réalisation non limitatif de l'invention ;
- A la figure 2, une représentation schématique d'un procédé de gestion des comptes utilisateurs d'une application du fournisseur d'application, mettant en oeuvre le fournisseur d'application et le fournisseur d'identité.

### DESCRIPTION DETAILLEE D'AU MOINS UN MODE DE REALISATION DE L'INVENTION

Sauf précision contraire, un même élément apparaissant sur des figures différentes présente une référence unique.

La présente invention concerne un procédé de provisionnement (création) de comptes utilisateurs CU dans une application APP d'un fournisseur d'application 1. En référence à la figure 1, l'application APP est hébergée dans le fournisseur d'application 1 et accessible via un réseau à des utilisateurs USR. Les utilisateurs USR considérés dans le mode de réalisation décrit appartiennent à groupement structuré de personnes, par exemple une entreprise comportant des salariés, les salariés (utilisateurs) disposant ou non de droit d'accès à l'application APP en fonction d'une politique de droits et rôles définie au sein de l'entreprise. Afin d'accéder à l'application APP, les utilisateurs USR doivent donc s'authentifier, ce qui permet de vérifier qu'ils disposent bien du droit d'accès à l'application APP.

L'entreprise dispose d'un fournisseur d'identité 2 auquel le fournisseur d'application 1 délègue la fonction d'authentification des utilisateurs USR de l'entreprise. Pour cela, le fournisseur d'application 1 et le fournisseur d'identité 2 ont préalablement établi une relation de confiance en utilisant un protocole 5 tel que les protocoles SAML, OAuth, OpenID ou d'autres protocoles de fédération d'identité ou de délégation des authentifications. Le fournisseur d'identité 2 et le fournisseur d'application 1 se connaissent mutuellement, et le fournisseur d'application 1, en utilisant le protocole 5, est capable de demander ou d'obtenir du fournisseur d'identité 2 une preuve d'authentification PAT pour les utilisateurs USR de l'entreprise.

Les utilisateurs USR disposent en effet des moyens nécessaires pour réaliser une authentification face au fournisseur d'identité 2, par exemple via un système de mot de passe, certificat, mécanisme de questions-réponses, etc. Le fournisseur d'identité 2 dispose quant à lui d'une base de données locale 3 (par exemple une base de données relationnelle ou un annuaire LDAP) dans laquelle les utilisateurs USR de l'entreprise sont enregistrés. L'ensemble des utilisateurs USR appartenant à l'entreprise est répertorié dans la base de données locale 3. Le fournisseur d'identité 2 est capable de se connecter à la base de données locale 3 au travers d'un protocole d'accès 8 tel que les protocoles LDAP/LDAPS (Lightweight Directory Access Protocol), Web Service, SQL (Structured Query Language), etc. Cette base de données locale 3 est utilisée par le fournisseur d'identité 2 pour vérifier les authentifications, identifier les utilisateurs USR, et connaître les droits des utilisateurs. La base de données locale 3 comporte donc, pour chaque utilisateur USR, des données d'authentification DAT et des données de droit d'accès DAC consultables par le fournisseur d'identité 2.

Par ailleurs, pour créer (provisionner) un compte utilisateur CU, le fournisseur d'identité 2 - ou un composant externe 9 que le fournisseur d'identité contrôle - fournit des informations de provisionnement à une base de données externe 4 gérée par le fournisseur d'application 1. Ces informations de provisionnement sont toutes les informations nécessaires au fournisseur d'application 1 pour que celui-ci soit capable de créer un compte utilisateur. De même, pour détruire (ou déprovisionner) un compte utilisateur CU, le fournisseur d'identité 2 ou le composant externe 9 fournit des informations de déprovisionnement à la base de données externe 4. Les informations de déprovisionnement sont toutes les informations nécessaires au fournisseur d'application 1 pour que celui-ci soit capable de déterminer le compte utilisateur CU à supprimer. Pour que le fournisseur d'identité 2 ou le composant externe 9 puisse communiquer avec la base de données externe 4, le fournisseur d'application 1 met à disposition du fournisseur d'identité 2 des interfaces et protocoles 6. Le fournisseur d'application 1 est quant à lui capable d'interroger la base de données externe 4 au moyen d'un protocole dédié 7, par exemple les protocoles LDAP/LDAPS (Lightweight Directory Access Protocol), Web Service, SQL (Structured Query Language), etc.

Le procédé selon un mode de réalisation est représenté en références aux figures 2, 3 et 4, dans différents cas. Dans chacun de ces cas, un utilisateur USR souhaite accéder à l'application APP.

Dans un premier cas représenté à la figure 2, l'utilisateur USR détient une preuve d'authentification PAT préalablement émise par le fournisseur d'identité 2. Ce cas se produit par exemple lorsque l'utilisateur USR s'est déjà connecté à l'application APP et dispose toujours du droit d'accéder à l'application APP.
- Selon une première étape 11, le fournisseur de service 1 reçoit une requête d'accès à l'application APP.
- Selon une deuxième étape 12, le fournisseur de service 1 détermine si l'utilisateur USR détient une preuve d'authentification PAT.
- Selon une troisième étape 13, suite à la détermination de la détention d'une preuve d'authentification PAT par l'utilisateur USR, le fournisseur de service 1 vérifie la preuve d'authentification PAT. La preuve d'authentification PAT est vérifiée avec les informations que connaît le fournisseur de service 1 sur le fournisseur d'identité 2 qui a émis cette preuve. Des mécanismes de protocoles de fédération d'identités et de délégation d'authentification, tels que SAML, OAuth, OpenID ou d'autres protocoles, sont utilisés pour vérifier la preuve.
- Selon une quatrième étape 14, suite à la vérification de la preuve d'authentification PAT, le fournisseur d'application 1 donne accès à l'application APP à l'utilisateur USR.

Dans un deuxième cas représenté à la figure 3, l'utilisateur USR ne détient pas de preuve d'authentification PAT, dispose du droit d'accéder à l'application APP, et ne dispose pas d'un compte utilisateur CU. Ce cas se produit par exemple lorsque l'utilisateur USR ne s'est jamais connecté à l'application APP bien qu'il dispose d'un droit d'accès à l'application APP.
- Selon une première étape 21, le fournisseur de service 1 reçoit une requête d'accès à l'application APP.
- Selon une deuxième étape 22, le fournisseur de service 1 détermine si l'utilisateur USR détient une preuve d'authentification PAT.
- Selon une troisième étape 23, suite à la détermination de la non-détention d'une preuve d'authentification PAT par l'utilisateur USR, le fournisseur d'application 1 détermine quel est le fournisseur d'identité 2 associé à l'utilisateur USR. Le fournisseur d'application 1 utilise les mécanismes des protocoles de fédération ou de délégation d'authentification pour déterminer le fournisseur d'identité 2 de l'utilisateur USR. Dans un autre mode de réalisation, le fournisseur d'application 1 demande l'information à l'utilisateur USR. Dans un autre mode de réalisation, le fournisseur d'application 1 utilise le nommage spécifique des URLs du service pour déterminer le fournisseur d'identité 2 associé.
- Selon une quatrième étape 24, le fournisseur de service 1 redirige l'utilisateur USR vers le fournisseur d'identité 2. Selon les protocoles de fédération et de délégation d'identité utilisés, dans un autre mode de réalisation, le fournisseur d'application 1 envoie directement une requête au fournisseur d'identité 2. Dans les deux cas, que la requête provienne de l'utilisateur USR ou du fournisseur d'application 1, le fournisseur d'identité 2 reçoit une requête de preuve d'authentification PAT.
- Selon une cinquième étape 25, le fournisseur d'identité 2 obtient de la base de données locale 3 des données sur l'utilisateur USR, comportant ses données d'authentification DAT et ses données de droit d'accès DAC.
- Selon une sixième étape 26, le fournisseur d'identité 2 authentifie l'utilisateur USR au moyen des données d'authentification DAT. Pour cela, le fournisseur d'identité 2 vérifie que l'utilisateur USR est bien un utilisateur déclaré et qu'il dispose des moyens d'authentification. Puis, l'authentification est réalisée, par exemple au moyen d'un mot de passe, d'un certificat, d'un mécanisme de questions-réponses, etc.
- Selon une septième étape 27, si l'utilisateur USR est correctement authentifié, le fournisseur d'application 2 détermine s'il détient ou non le droit d'accéder à l'application APP, au moyen des données de droit d'accès DAC. Le fournisseur d'identité 2 vérifie ainsi que l'utilisateur USR dispose bien des droits et rôles nécessaires pour se connecter et utiliser l'application APP. On note que si l'utilisateur USR ne parvient pas à s'authentifier correctement, le procédé s'arrête.
- Selon une huitième étape 28, le fournisseur d'identité 2 détermine l'existence ou l'absence d'un compte utilisateur CU associé à l'utilisateur USR, par interrogation de la base de données externe 4 gérée par le fournisseur d'application 1. Le fournisseur d'identité 2 détermine donc si l'utilisateur USR est déjà associé à un compte utilisateur CU dans le fournisseur d'application 1, ledit compte utilisateur CU ayant été préalablement provisionné par le fournisseur d'identité 2 ou par d'autres moyens. Pour cela, le fournisseur d'identité 2 utilise les interfaces et protocoles 6 mis à sa disposition par le fournisseur d'application 1.
- Selon une neuvième étape 29, suite à la détermination de l'existence du droit d'accéder à l'application APP et de l'absence d'un compte utilisateur CU, le fournisseur d'identité 2 déclenche le provisionnement du compte utilisateur CU. Dans un premier mode de réalisation, le fournisseur d'identité 2 réalise lui-même le provisionnement en utilisant les interfaces et protocoles 6 mis à disposition par le fournisseur de service 1 et en fournissant toutes les informations nécessaires à la création du compte. Dans un deuxième mode de réalisation, le fournisseur d'identité 2 ne réalise pas lui-même le provisionnement, mais le délègue au composant externe 9, par exemple un composant de gestion des identités et des accès, qui déclenche des instructions de provisionnement. Le composant externe 9 utilise les interfaces et protocoles 6 mis à disposition par le fournisseur de service 1 et il fournit toutes les informations nécessaires à la création du compte utilisateur CU.
- Selon une dixième étape 30, suite à l'authentification correcte de l'utilisateur USR par le fournisseur d'identité 2, la détermination du droit d'accéder à l'application APP par l'utilisateur USR, et l'accomplissement du mécanisme de provisionnement aboutissant à la création d'un compte utilisateur CU dans le fournisseur d'application 1, le fournisseur d'identité 2 génère une preuve d'authentification PAT associée à l'utilisateur USR.
- Selon une onzième étape 31, le fournisseur d'identité 2 envoie la preuve d'authentification PAT au fournisseur d'application 1 conformément au protocole 5 entre les deux parties.
- Selon une douzième étape 32, le fournisseur d'application 1 utilise les informations provisionnées dans sa base de données 4 et donne accès à l'application APP à l'utilisateur USR.

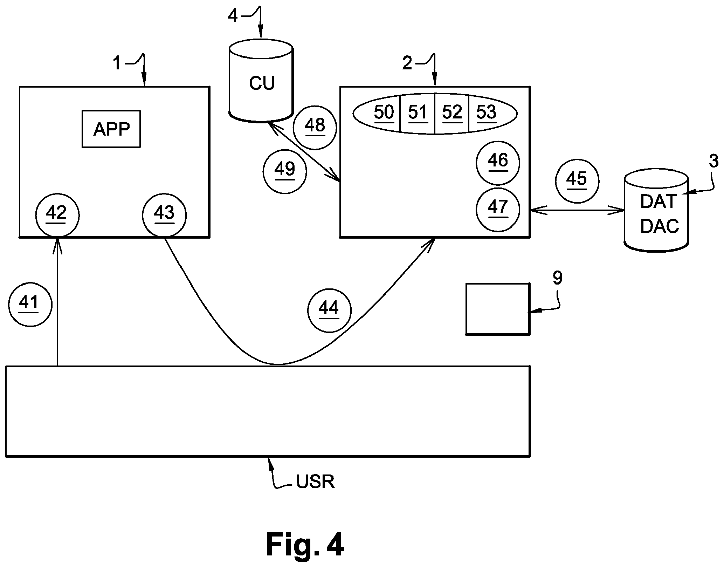

Dans un troisième cas représenté à la figure 4, l'utilisateur USR ne détient pas de preuve d'authentification PAT, ne dispose pas du droit d'accéder à l'application APP, et dispose d'un compte utilisateur CU. Ce cas se produit par exemple lorsque l'utilisateur USR disposait du droit d'accéder à l'application APP, s'était déjà connecté à l'application APP, mais a ensuite perdu son droit d'accéder à l'application APP.
- Selon une première étape 41, le fournisseur de service 1 reçoit une requête d'accès à l'application APP.
- Selon une deuxième étape 42, le fournisseur de service 1 détermine si l'utilisateur USR détient une preuve d'authentification PAT.
- Selon une troisième étape 43, suite à la détermination de la non-détention d'une preuve d'authentification PAT par l'utilisateur USR, le fournisseur d'application 1 détermine quel est le fournisseur d'identité 2 associé à l'utilisateur USR. Le fournisseur d'application 1 utilise les mécanismes des protocoles de fédération ou de délégation d'authentification pour déterminer le fournisseur d'identité 2 de l'utilisateur USR. Dans un autre mode de réalisation, le fournisseur d'application 1 demande l'information à l'utilisateur USR. Dans un autre mode de réalisation, le fournisseur d'application 1 utilise le nommage spécifique des URLs du service pour déterminer le fournisseur d'identité 2 associé.
- Selon une quatrième étape 44, le fournisseur de service 1 redirige l'utilisateur USR vers le fournisseur d'identité 2. Selon les protocoles de fédération et de délégation d'identité utilisés, dans un autre mode de réalisation, le fournisseur d'application 1 envoie directement une requête au fournisseur d'identité 2. Dans les deux cas, que la requête provienne de l'utilisateur USR ou du fournisseur d'application 1, le fournisseur d'identité 2 reçoit une requête de preuve d'authentification PAT.
- Selon une cinquième étape 45, le fournisseur d'identité 2 obtient de la base de données locale 3 des données sur l'utilisateur USR, comportant ses données d'authentification DAT et ses données de droit d'accès DAC.
- Selon une sixième étape 46, le fournisseur d'identité 2 authentifie l'utilisateur USR au moyen des données d'authentification DAT. Pour cela, le fournisseur d'identité 2 vérifie que l'utilisateur USR est bien un utilisateur déclaré et qu'il dispose des moyens d'authentification. Puis, l'authentification est réalisée, par exemple au moyen d'un mot de passe, d'un certificat, d'un mécanisme de questions-réponses, etc.
- Selon une septième étape 47, si l'utilisateur USR est correctement authentifié, le fournisseur d'application 2 détermine s'il détient ou non le droit d'accéder à l'application APP, au moyen des données de droit d'accès DAC. Le fournisseur d'identité 2 vérifie ainsi que l'utilisateur USR dispose bien des droits et rôles nécessaires pour se connecter et utiliser l'application APP. On note que si l'utilisateur USR ne parvient pas à s'authentifier correctement, le procédé s'arrête.
- Selon une huitième étape 48, le fournisseur d'identité 2 détermine l'existence ou l'absence d'un compte utilisateur CU associé à l'utilisateur USR, par interrogation de la base de données externe 4 gérée par le fournisseur d'application 1. Le fournisseur d'identité 2 détermine donc si l'utilisateur USR est déjà associé à un compte utilisateur CU dans le fournisseur d'application 1. Pour cela, le fournisseur d'identité 2 utilise les interfaces et protocoles 6 mis à sa disposition par le fournisseur d'application 1.
- Selon une neuvième étape 49, suite à la détermination de l'absence du droit d'accéder à l'application APP mais de l'existence d'un compte utilisateur CU, le fournisseur d'identité 2 déclenche le déprovisionnement du compte utilisateur CU. Dans un premier mode de réalisation, le fournisseur d'identité 2 réalise lui-même le déprovisionnement en utilisant les interfaces et protocoles 6 mis à disposition par le fournisseur de service 1 et en fournissant toutes les informations nécessaires à la destruction du compte utilisateur CU. Dans un deuxième mode de réalisation, le fournisseur d'identité 2 ne réalise pas lui-même le déprovisionnement, mais le délègue au composant externe 9, qui déclenche des instructions de déprovisionnement. Le composant externe 9 utilise les interfaces et protocoles 6 mis à disposition par le fournisseur de service 1 et il fournit toutes les informations nécessaires à la destruction du compte utilisateur CU. L'utilisateur USR n'aura donc pas accès à l'application APP.

Par ailleurs, le fournisseur d'identité 2 sauvegarde en permanence l'état des comptes utilisateurs CU provisionnés et déprovisionnés pour chaque utilisateur USR et chaque fournisseur d'application 1 (en effet, un fournisseur d'identité 2 peut être en relation avec plusieurs fournisseurs d'application 1). Ainsi, dans une étape 50, suite à un provisionnement (étape 29) ou un déprovisionnement (étape 49), le fournisseur d'identité 2 met à jour des informations de comptes utilisateurs, indiquant les comptes utilisateur CU associés au fournisseur d'applications 1 et les comptes utilisateur CU associés à l'utilisateur USR.

Dans une étape 51, le fournisseur d'identité 2 réalise une étape de vérification globale. Lors de cette étape de vérification globale, pour chaque utilisateur USR inscrit auprès du fournisseur d'identité 2, le fournisseur d'identité 2 obtient de la base de données locale 3 des données de droit d'accès relatives à l'utilisateur USR. Puis, le fournisseur d'identité 2 détermine une liste de comptes utilisateur CU à déprovisionner, en fonction des droits d'accès et des informations de comptes utilisateurs CU. Enfin, le fournisseur d'identité 2 déclenche le déprovisionnement des comptes utilisateur CU de la liste de comptes à déprovisionner de la manière décrite à l'étape 49. Cette étape de vérification globale 51 peut être réalisée sur demande ou automatiquement sur changement des données de droit d'accès DAC. Ainsi, le fournisseur d'identité 2 s'assure que les comptes utilisateur CU provisionnés sont bien associés à des utilisateurs USR qui ont toujours les droits ou rôles nécessaires pour utiliser ces comptes utilisateur CU. Le cas échéant, des comptes utilisateur CU sont déprovisionnés.

Dans une étape 52, le fournisseur d'identité 2 réalise une étape de réconciliation. Lors de cette étape de réconciliation, le fournisseur d'identité 2 obtient de la base de données externe 4 une liste de comptes utilisateur CU provisionnés. Puis, le fournisseur d'identité 2 compare les informations de comptes utilisateurs CU avec la liste de comptes à provisionner. Enfin, le fournisseur d'identité 2 met à jour les informations de comptes utilisateurs en fonction du résultat de la comparaison. Cette étape de réconciliation 52 peut être réalisée sur demande ou automatiquement à intervalles réguliers. Le fournisseur d'identité 2 obtient alors du fournisseur d'application 1 la liste des comptes de l'entreprise et effectue un rapprochement avec la liste des comptes connus par le fournisseur d'identité 2. Ce mécanisme permet de détecter des désynchronisations et le cas échéant de générer des alertes ou bien corriger des incohérences lors de leur détection.

Dans une étape 53, le fournisseur d'identité 2 réalise une étape de suppression de compte. Lors de cette étape de suppression de compte 53, le fournisseur d'identité 2 obtient une information de modification de données de droit d'accès d'un utilisateur USR. Puis, le fournisseur d'identité 2 détermine une liste de comptes à déprovisionner, comprenant au moins un compte associé à l'utilisateur. La liste est déterminée en fonction des données de droits d'accès modifiées et des informations sur les comptes de l'utilisateur. Enfin, le fournisseur d'identité 2 déclenche le déprovisionnement des comptes utilisateur CU de la liste de comptes à déprovisionner. Ainsi, dans le cas où un utilisateur USR perd ses droits ou rôles nécessaires à la possession d'un compte utilisateur CU, alors un déprovisionnement peut être déclenché en utilisant le mécanisme de suppression de compte.

Ainsi, le procédé selon l'invention offre l'avantage de ne créer les comptes qu'au moment de leur utilisation effective, de détruire les comptes qui ne sont plus utilisables, et par conséquent d'économiser des ressources en termes de comptes déclarés dans le fournisseur d'application.

## Revendications

1. Procédé de gestion des comptes utilisateurs (CU) dans une application (APP) d'un fournisseur d'application (1), comprenant les étapes suivantes, réalisées par un fournisseur d'identité (2) partageant une relation de confiance avec le fournisseur d'application (1) :
- recevoir (24, 44) une requête de preuve d'authentification (PAT) pour authentifier un utilisateur (USR) tentant d'accéder à l'application (APP), ledit utilisateur (USR) étant inscrit auprès du fournisseur d'identité (2)
- obtenir (25, 45) d'une base de données locale (3) des données sur l'utilisateur (USR), lesdites données comprenant des données d'authentification (DAT) et des données de droit d'accès (DAC)
- authentifier (26, 46) l'utilisateur (USR) au moyen des données d'authentification (DAT)
- déterminer (27, 47) le droit d'accéder à l'application (APP) par l'utilisateur (USR), au moyen des données de droit d'accès (DAC)
- déterminer (28, 48) l'existence ou l'absence d'un compte utilisateur (CU) associé à l'utilisateur (USR), par interrogation d'une base de données externe (4) gérée par le fournisseur d'application (1)
- si l'utilisateur (USR) dispose du droit d'accéder à l'application (APP) et qu'il n'existe pas de compte utilisateur (CU) associé à l'utilisateur (USR) :
▪ déclencher (29) le provisionnement du compte utilisateur (CU) auprès d'une entité (1, 9)
▪ générer (30) une preuve d'authentification (PAT) associée à l'utilisateur (USR)
▪ envoyer (31) ladite preuve d'authentification (PAT) au fournisseur d'application (1).

2. Procédé selon la revendication précédente, comportant l'étape suivante : si l'utilisateur (USR) ne dispose pas du droit d'accéder à l'application (APP) et qu'il existe un compte utilisateur (CU) associé à l'utilisateur (USR), déclencher (49) le déprovisionnement du compte utilisateur (CU) auprès de l'entité (1, 9).

3. Procédé selon l'une des revendications précédentes, dans lequel l'entité (1) est le fournisseur d'application (1), le fournisseur d'identité (2) fournissant des instructions de provisionnement ou de déprovisionnement de compte à la base de données externe (4).

4. Procédé selon l'une des revendications 1 ou 2, dans lequel l'entité (9) est un composant externe de gestion (9), le composant externe de gestion (9) fournissant des instructions de provisionnement ou de déprovisionnement de compte à la base de données externe (4).

5. Procédé selon l'une des revendications précédentes, dans lequel après un déclenchement de provisionnement (29) ou de déprovisionnement (49) d'un compte utilisateur (CU), le fournisseur d'identité (2) met à jour (50) des informations de comptes utilisateurs, indiquant les comptes utilisateur (CU) associés au fournisseur d'applications (1) et les comptes utilisateur (CU) associés à l'utilisateur (USR).

6. Procédé selon la revendication précédente, dans lequel le fournisseur d'identité (2) réalise une étape de vérification globale (51), comprenant :
- pour chaque utilisateur (USR) inscrit auprès du fournisseur d'identité (2), obtenir de la base de données locale (3) des données de droit d'accès (DAC) relatives à l'utilisateur (USR),
- déterminer une liste de comptes utilisateur (CU) à déprovisionner, en fonction des droits d'accès (DAC) et des informations de comptes utilisateurs
- déclencher (49) le déprovisionnement des comptes utilisateur (CU) de la liste de comptes à déprovisionner.

7. Procédé selon l'une des revendications 5 ou 6, dans lequel le fournisseur d'identité (2) réalise une étape de réconciliation (52), comprenant :
- obtenir de la base de données externe (4) une liste de comptes utilisateur (CU) provisionnés
- comparer les informations de comptes utilisateurs (CU) avec la liste de comptes à provisionner
- mettre à jour les informations de comptes utilisateurs (CU) en fonction du résultat de la comparaison.

8. Procédé selon l'une des revendications 5 à 7, dans lequel le fournisseur d'identité (2) réalise une étape de suppression de compte (53), comprenant :
- obtenir une information de modification de données de droit d'accès (DAC) d'un utilisateur (USR)
- déterminer une liste de comptes utilisateur (CU) à déprovisionner, en fonction des données de droits d'accès (DAC) modifiées et des informations de comptes utilisateurs
- déclencher le déprovisionnement des comptes utilisateur (CU) de la liste de comptes à déprovisionner.

9. Fournisseur d'identité (2) partageant une relation de confiance avec un fournisseur d'application (1), adapté pour mettre en oeuvre un procédé selon l'une des revendications 1 à 8.

10. Programme d'ordinateur, comprenant un ensemble d'instructions, qui lorsqu'elles sont exécutées par un ordinateur, provoque la mise en oeuvre d'un procédé selon l'une des revendications 1 à 8.

## Patentansprüche

1. Verwaltungsverfahren von Nutzerkonten (CU) in einer Anwendung (APP) eines Anwendungsproviders (1), umfassend die folgenden Schritte, die durch einen Identitäts-Provider (2) realisiert sind, der ein Vertrauensverhältnis mit dem Anwendungs-Provider (1) teilt:
- Empfang (24, 44) einer Authentifizierungsbeweisanfrage (PAT) zur Authentifizierung eines Nutzers (USR), der versucht, auf die Anwendung (APP) zuzugreifen, wobei der genannte Nutzer (USR) beim Identitäts-Provider (2) eingetragen ist;
- Erhalt (25, 45) der Daten über den Nutzer (USR) aus einer lokalen Datenbank (3), wobei die genannten Daten Authentifzierungsdaten (DAT) und Zugangsberechtigungsdaten (DAC) umfassen
- Authentifizierung (26, 46) des Nutzers (USR) anhand der Authentifizierungsdaten (DAT),
- Bestimmung (27, 47) des Zugriffsrechts auf die Anwendung (APP) durch den Nutzer (USR) anhand der Zugriffsberechtigungsdaten (DAC),
- Bestimmung (28, 48) des Vorhandenseins oder des Fehlens eines dem Nutzer (USR) zugeordneten Nutzerkontos (CU) per Abfrage einer externen Datenbank (4), die von dem Anwendungs-Provider (1) verwaltet wird
- Wenn der Nutzer (USR) über das Zugangsrecht auf die Anwendung (APP) verfügt und es kein dem Nutzer (USR) zugeordnetes Nutzerkonto (CU) gibt:
▪ Auslösen (29) der Bestückung des Nutzerkontos (CU) bei einem Betreiber (1, 9);
▪ Generieren (30) eines Authentifizierungsbeweises (PAT), der dem Nutzer (USR) zugeordnet ist;
▪ Versenden (31) des genannten Authentifizierungsbeweises (PAT) an den Anwendungs-Provider (1);

2. Verfahren gemäß dem voranstehenden Anspruch, umfassend den folgenden Schritt: Wenn der Nutzer (USR) über kein Zugangsrecht zur Anwendung (APP) verfügt und es ein dem Nutzer (USR) zugeordnetes Nutzerkonto (CU) gibt, Auslösen (49) der Entleerung des Nutzerkontos (CU) bei dem Betreiber (1, 9).

3. Verfahren gemäß einem der voranstehenden Ansprüche, bei dem der Betreiber (1) der Anwendungs-Provider (1) ist, wobei der Identitäts-Provider (2) Bestückungs- oder Entleerungsanweisungen des Kontos für die externe Datenbank (4) liefert.

4. Verfahren gemäß einem der Ansprüche 1 oder 2, bei dem der Betreiber (9) eine externe Verwaltung (9) ist, wobei die externe Verwaltungskomponente (9) Bestückungs- oder Entleerungsanweisungen des Kontos an die externe Datenbank (4) liefert.

5. Verfahren gemäß einem der voranstehenden Ansprüche, bei dem nach einem Auslösen einer Bestückung (29) oder einer Entleerung (49) eines Nutzerkontos (CU) der Identitäts-Provider (2) Nutzerkontodaten aktualisiert (50), die die dem Anwendungs-Provider (1) zugeordneten Nutzerkonten (CU) und die dem Nutzer (USR) zugeordneten Nutzerkonten (CU) angeben.

6. Verfahren gemäß dem voranstehenden Anspruch, bei dem der Identitäts-Provider (2) einen globalen Überprüfungsschritt (51) realisiert, umfassend:
▪ für jeden bei dem Identitäts-Provider (2) eingetragenen Nutzer (USR) Erhalt der Zugangsberechtigungsdaten (DAC) für den Nutzer (USR) aus der lokalen Datenbank (3),
▪ Bestimmung einer Liste der Nutzerkonten (CU), die in Abhängigkeit von den Zugangsrechten (DAC) zu entleeren ist, und der Nutzerkontendaten
▪ Bestimmung (49) der Entleerung der Nutzerkonten (CU) der zu entleerenden Kontenliste.

7. Verfahren gemäß einem der Ansprüche 5 oder 6, bei dem der Identitäts-Provider (2) einen Abstimmungsschritt (52) realisiert, umfassend:
- Erhalt einer Liste der bestückten Nutzerkonten (CU) aus der externen Datenbank (4)
- Vergleich der Daten der Nutzerkonten (CU) mit der Liste der zu bestückenden Konten
- Aktualisierung der Daten der Nutzerkonten (CU) in Abhängigkeit des Ergebnisses des Vergleichs.

8. Verfahren eines der Ansprüche 5 bis 7, bei dem der Identitäts-Provider (2) einen Kontenlöschschritt (53) realisiert, umfassend:
- Erhalt einer Änderungsinformation der Zugangsberechtigungsdaten (DAC) eines Nutzers (USR)
- Bestimmung einer Liste der zu entleerenden Nutzerkonten (CU) in Abhängigkeit von den abgeänderten Zugangsberechtigungsdaten (DAC) und der Nutzerkontodaten
- Auslösen der Entleerung der Nutzerkonten (CU) der Liste der zu entleerenden Konten.

9. Identitäts-Provider (2), der eine Vertrauensbeziehung mit einem Anwendungs-Provider (1) teilt, der geeignet ist, um ein Verfahren gemäß einem der Ansprüche 1 bis 8 umzusetzen.

10. Computerprogramm, umfassend eine Gruppe von Anweisungen, die, wenn diese von einem Computer ausgeführt sind, die Umsetzung eines Verfahrens gemäß einem der Ansprüche 1 bis 8 hervorruft.

## Claims

1. A method for managing user accounts (CU) in an application (APP) of an application provider (1), comprising the following steps, performed by an identity provider (2) sharing a trust relationship with the application provider (1):
- receiving (24, 44) a request for proof of authentication (PAT) in order to authenticate a user (USR) attempting to access the application (APP), said user (USR) being registered with the identity provider (2);
- obtaining (25, 45), from a local database (3), data about the user (USR), said data comprising authentication data (DAT) and access rights data (DAC);
- authenticating (26, 46) the user (USR) by means of the authentication data (DAT);
- determining (27, 47) the right to access the application (APP) by the user (USR), by means of the access rights data (DAC);
- determining (28, 48) the existence or absence of a user account (CU) associated with the user (USR), by querying an external database (4) managed by the application provider (1);
- if the user (USR) has the right to access the application (APP) and there is no user account (CU) associated with the user (USR):
▪ triggering (29) the provisioning of the user account (CU) at an entity (1, 9);
▪ generating (30) a proof of authentication (PAT) associated with the user (USR) ;
▪ sending (31) said proof of authentication (PAT) to the application provider (1).

2. The method according to the preceding claim, including the following step: if the user (USR) does not have the right to access the application (APP) and there is a user account (CU) associated with the user (USR), triggering (49) the deprovisioning of the user account (CU) at the entity (1, 9).

3. The method according to one of the preceding claims, wherein the entity (1) is the application provider (1), the identity provider (2) providing account provisioning or deprovisioning instructions to the external database (4).

4. The method according to one of claims 1 or 2, wherein the entity (9) is an external management component (9), the external management component (9) providing account provisioning or deprovisioning instructions to the external database (4).

5. The method according to one of the preceding claims, wherein after a provisioning (29) or deprovisioning (49) triggering of a user account (CU), the identity provider (2) updates (50) information of user accounts, indicating the user accounts (CU) associated with the application provider (1) and the user accounts (CU) associated with the user (USR).

6. The method according to the preceding claim, wherein the identity provider (2) performs an overall checking step (51), comprising:
- for each user (USR) registered with the identity provider (2), obtaining from the local database (3) access rights data (DAC) relating to the user (USR);
- determining a list of user accounts (CU) to be deprovisioned, based on the access rights (DAC) and the information of user accounts;
- triggering (49) the deprovisioning of the user accounts (CU) from the list of accounts to be deprovisioned.

7. The method according to one of claims 5 or 6, wherein the identity provider (2) performs a reconciliation step (52), comprising:
- obtaining from the external database (4) a list of user accounts (CU) provisioned;
- comparing the information of user accounts (CU) with the list of accounts to be provisioned;
- updating the information of user accounts (CU) based on the result of the comparison.

8. The method according to one of claims 5 to 7, wherein the identity provider (2) performs an account deletion step (53), comprising:
- obtaining a piece of information for modifying access rights data (DAC) of a user (USR);
- determining a list of user accounts (CU) to be deprovisioned, based on the modified access rights data (DAC) and the information of user accounts;
- triggering the deprovisioning of the user accounts (CU) from the list of accounts to be deprovisioned.

9. An identity provider (2) sharing a trust relationship with an application provider (1), adapted to implement a method according to one of claims 1 to 8.

10. A computer program, comprising a set of instructions, which when run by a computer, causes the implementation of a method according to one of claims 1 to 8.
